# EUROPEAN PATENT SPECIFICATION

(11) **EP 4 332 153 B1**
(45) Date of publication and mention of the grant of the patent: **14.10.2026**
(21) Application number: 22935580.5
(22) Date of filing: 05.08.2022
(51) Int. Cl.: C08J 5/18, C08L 23/12

(54) **POLYPROPYLENE HEAT-SHRINKABLE FILM**
WÄRMESCHRUMPFBARE POLYPROPYLENFOLIE
FILM THERMORÉTRACTABLE EN POLYPROPYLÈNE

(30) Priority: 28.03.2022 JP 2022052155; 20.05.2022 JP 2022083247
(43) Date of publication of application: 06.03.2024
(73) Proprietor: TOYOBO CO., LTD., Osaka-shi, Osaka 530-0001 (JP)
(72) Inventor: YAMAZAKI, Atsuro, Inuyama-shi, Aichi 484-8508 (JP); ISHIMARU, Shintaro, Inuyama-shi, Aichi 484-8508 (JP); HARUTA, Masayuki, Inuyama-shi, Aichi 484-8508 (JP)
(74) Representative: Vossius & Partner Patentanwälte Rechtsanwälte mbB
(86) International application number: PCT/JP2022/030147
(87) International publication number: WO 2023/188447

(56) References cited:
- EP-A1- 1 717 270
- EP-A1- 2 116 354
- JP-A- 2003 191 324
- JP-A- 2006 082 383
- JP-A- 2008 174 728
- JP-A- 2009 143 143
- JP-A- 2021 036 005
- JP-B2- 5 160 028

## Description

### TECHNICAL FIELD

The present invention relates to a polypropylene heat-shrinkable film suited as a heat-shrinkable label, and to labels using such films, and packaged articles with labels.

### BACKGROUND ART

Heat-shrinkable films are widely used as labels primarily for preventing contamination and tampering of the contents of glass bottles and plastic bottles, as well as for protecting packaged items and products. One particularly common application is for labeling beverage PET bottles. Generally, when labeling a PET bottle with a heat-shrinkable film, a PET bottle covered with a label is transported on a conveyer line to a tunnel filled with steam. Inside the tunnel, steam is blown onto the film, heating the film to approximately 70°C to 100°C, causing it to shrink and attach to the bottle. Films that are widely used to this end are those made by drawing polyester, polystyrene, or polyvinyl chloride, which offer excellent low-temperature heat shrinkability.

On the other hand, beverage PET bottles have attracted attention as recyclable resource. After use, PET bottles are collected and recycled into molding resin. However, the labels must be separated from the PET bottles because the plastics used for labels are of different materials from the PET bottles, and the labels are often printed on.

In other words, the labels need to be removed from the bottles before recycling because inclusion of the labels leads to a decrease in the quality of PET bottle recycling. The reality, however, is that the bottles are frequently collected without removing the labels. At present, the labels are removed by collectors, and the recycling workload is high. This is because polystyrene, polyester, and polyvinyl chloride have a small difference in specific gravity compared to PET bottles, and cannot be easily separated in water by float-sink separation. Industrially, the density-based float-sink separation is a very easy process, allowing separation by specific gravity in water, particularly when the labels have a specific gravity of 1.0 or less compared to the PET bottles, which have a specific gravity of about 1.3 or higher. Such labels enable separation with considerable efficiency even when the labels become included during the collection of PET bottles, greatly reducing the workload during collection, and enabling an improvement in the quality of the recycled resin obtained from the collected PET bottles.

Under these circumstances, expectations are high for the use of polypropylene because it has a specific gravity of about 0.9, making it lighter than PET and enabling floatation separation in water. A problem, however, is the insufficient shrinkability at the temperature of 90°C required for steam shrinkage. Additionally, compared to polyester and polystyrene, polypropylene had the issue of significant post-shrinkage (natural shrinkage) at room temperature, which can result in changes in film dimensions. In the case of rolled films, it can lead to deformation, causing problems such as printing misalignment or wrinkling during secondary processing.

Various proposals have been made to improve the shrinkability. For example, in PTL 1, petroleum resins or cyclic olefin resins having a high glass transition temperature are added to improve low-temperature shrinkability and to reduce the rate of natural shrinkage. However, the shrinkage rate at 90°C is still insufficient due to the addition of high glass transition temperature resins, resulting in poor shrink finish properties. Furthermore, the addition of petroleum resins and cyclic olefins increases the specific gravity, leading to a decrease in the efficiency of of float-sink separation. Additionally, polypropylene has the characteristic of being soft compared to polyester and polystyrene, resulting in strong adhesion when torn along the perforation line. Moreover, the aforementioned film is a film that is only stretched in the width direction, making it difficult to tear along the perforation line in the longitudinal direction, which is orthogonal to the primary shrinkage direction. This causes poor perforation opening properties for labels, known as seam tearability issues.

The film proposed in PTL 2 is intended to reduce the rate of natural shrinkage by controlling and reducing the molecular weight distribution of polypropylene, or layering an amorphous resin having a high glass transition temperature, such as a cyclic olefin resin. However, these films were found to be insufficient in low-temperature shrinkability compared to the rate of shrinkage required for beverage labels. Additionally, cyclic olefin resins involve the issue of high specific gravity.

The film proposed in PTL 3, petroleum resins or polyethylene are added to enable low-temperature drawing and improve low-temperature shrinkability. However, adding petroleum resins not only increases the specific gravity, leading to a decrease in the efficiency of float-sink separation, but also causes significant post-shrinkage (natural shrinkage) at room temperature in the film drawn at low temperatures. This can result in changes in film dimensions, and, in the case of rolled films, it can lead to deformation, causing problems such as printing misalignment or wrinkling during secondary processing.

On the other hand, the inventors discovered that by subjecting the film to stretching not only in the width direction but also in the longitudinal direction, the perforation opening in the longitudinal direction could be improved. However, this led to an increase in the longitudinal shrinkage rate, which is orthogonal to a main shrinkage direction. Consequently, when the label is shrunk and applied, it undergoes shrinkage in both the primary and orthogonal directions, resulting in significant distortion of the label (commonly known as vertical warping). Additionally, due to the increased natural shrinkage in the longitudinal direction caused by stretching, there was a problem with deformation and bagginess occurring during storage of rolled films, making it prone to tight winding and sagging.
PTL 4 provides a polypropylene based heat shrinkable film obtained by using a propylene-ethylene block copolymer which satisfies specific requirements, and having heat shrinkability imparted by orientation in at least one direction. PTL 5 relates to is a heat-shrinkable polyolefin film formed in an elongated shape with a constant width from a polyolefin resin including a propylene-a-olefin copolymer as a principal component, a main shrinkage direction thereof being in a longitudinal direction.

### CITATION LIST

### PATENT LITERATURE

PTL 1: JP4380330B
PTL 2: JP4574462B
PTL 3: JP5690103B
PTL 4: EP 1717270 A1
PTL 5: EP 2116354 A1

### SUMMARY OF INVENTION

### PROBLEMS TO BE SOLVED BY THE INVENTION

The present invention was made to overcome the foregoing issues, and it is an object of the invention to provide a heat-shrinkable polypropylene film having a specific gravity of 0.95 or less, and that exhibits excellent low-temperature shrinkability, small natural shrinkage, and favorable perforation opening property.

### SOLUTION TO THE PROBLEMS

The inventors have diligently studied and as a result, have discovered a means to solve the above problems by the following methods, leading to the achievement of this invention.
That is, the present invention comprises the drawn film, the label, the packaged article and the use of the label as defined in the annexed claims.

As set forth in claim 1, the drawn film comprises a polypropylene resin composition, wherein
(i) the propylene composition uses a copolymer of propylene and other α-olefins, wherein the copolymer of propylene and other α-olefins is a random or block copolymer obtained by polymerizing propylene with one or more of α-olefin selected from ethylene, 1-butene, 1-pentene, 1 hexene, and 1,4-methyl-1-pentene; and
(ii) a melt flow rate (MFR) at 230°C of the polypropylene resin composition, measured in compliance with JIS-K-7210, is 0.1 to 30 g/10 min;
and wherein the drawn film is a polypropylene heat-shrinkable film satisfying the following (1) to (7):
(1) a hot water thermal shrinkage rate in a widthwise direction of 40% or more and 80% or less when the film is immersed in 90°C hot water for 10 seconds,
(2) a hot water thermal shrinkage rate in a lengthwise direction of 1% or more and 12% or less when the film is immersed in 90°C hot water for 10 seconds,
(3) a specific gravity of 0.87 or more and 0.95 or less,
(4) a right-angled tear strength in the range of 100 mN/mm or more and 330 N/mm or less in a lengthwise direction when the film is subjected to 10% shrinkage in a widthwise direction in hot water at 80°C,
(5) a refractive index difference Ny - Nx of 0.005 or more and 0.028 or less, where Ny is a widthwise direction refractive index, and Nx is a lengthwise direction refractive index,
(6) a widthwise direction natural shrinkage rate of 0.1% or more and 3.0% or less after the polypropylene heat-shrinkable film is aged for 672 hours in a 40°C, 65% RH atmosphere, and
(7) a lengthwise direction natural shrinkage rate of 0.1% or more and 1.0% or less after the polypropylene heat-shrinkable film is aged for 672 hours in a 40°C, 65% RH atmosphere.

### ADVANTAGEOUS EFFECTS OF INVENTION

A polypropylene heat-shrinkable film of the invention has a high shrinkage rate at 90°C, allowing for not only desirable finishing as a beverage label without wrinkles or insufficient shrinkage, but also excellent in perforation opening property. Because of its low natural shrinkage rate in both the width direction and the longitudinal direction., the film shows small dimensional changes and reduced wrinkles even after prolonged storage, demonstrating superior practicality. Additionally, the low specific gravity of the film enables efficient float-sink separation from PET bottles, making it highly recyclable.

### BRIEF DESCRIPTION OF DRAWINGS

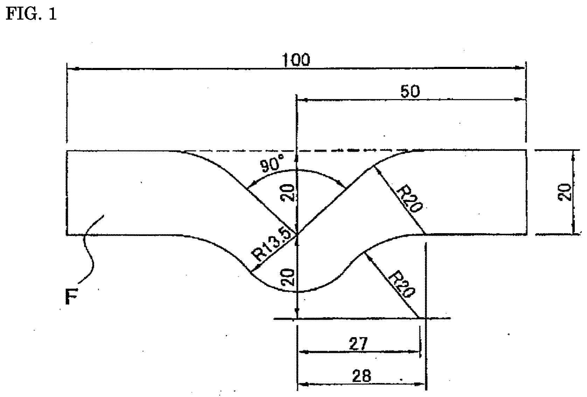

[FIG. 1] FIG. 1 is an explanatory view illustrating the shape of the test piece in the measurement of right-angle tear strength (Note: the unit of length for each part of the test piece in the figure is mm).

### DESCRIPTION OF EMBODIMENTS

A polypropylene heat-shrinkable film obtained by drawing a polypropylene resin composition used in the invention preferably has at least one melting point (melting peak temperature) in each of the range of 70°C or higher and 100°C or lower, and in the range of higher than 100°C and 170°C or lower respectively, as measured by differential scanning calorimetry (DSC). A heat-shrink film for labeling PET bottles generally undergoes shrinkage by being heated at a temperature of 70°C to 100°C with steam. Accordingly, the crystals aligned in the drawn film undergo partial melting, and show shrinking properties when the film has a melting point in a range of 70°C or higher and 100°C or lower. On the other hand, having a melting point in a range of higher than 100°C or higher and 170°C or lower is preferable because it enables an improvement of heat resistance, and a reduction of fusing or blocking during heating. It is more preferable to have a melting point in each of a range of 75°C or higher and 97°C or lower, and a range of 110°C or higher and 165°C or lower respectively, particularly preferably in each of a range of 80°C or higher and 95°C or lower, and a range of 115°C or higher and 160°C or lower respectively.

The polypropylene composition uses a copolymer of propylene and other α-olefins. The copolymer is a random or block copolymer obtained by polymerizing propylene with one of the α-olefins, or two or more of the α-olefins selected from ethylene, 1-butene, 1-pentene, 1-hexene, and 1,4-methyl-1-pentene. The steric structure of these polymers is not particularly limited, and may be isotactic, atactic, syndiotactic, or a mixture of these structures. The resin composition using the propylene-α-olefin copolymer has a specific gravity of 0.85 or more to 0.95 or less, preferably 0.86 or more to 0.93 or less, particularly preferably 0.87 or more to 0.92 or less. A polypropylene resin with a specific gravity of less than 0.85 is not preferable because such polypropylene resins typically show considerably low crystallinity, and cannot readily provide the required rate of shrinkage in the drawn film. A specific gravity of more than 0.95 is not preferable because it results in a film with a specific gravity of more than 0.95.

In the invention, it is not preferable to contain a cyclic olefin resin because it increases the specific gravity, and decreases the low-temperature shrinkability, as described above. It is also not preferable to contain a petroleum resin (also called hydrocarbon resin) or a hydrogenated petroleum resin because it leads to an increase of specific gravity, and an increase of natural shrinkage rate, as described above.

A polypropylene heat-shrinkable film obtained by drawing an undrawn sheet obtained from the polypropylene resin composition needs to have a specific gravity of 0.87 or more to 0.95 or less. The specific gravity is more preferably 0.88 or more to 0.94 or less, particularly preferably 0.88 or more to 0.93 or less. It is not preferable to use raw materials that produce a specific gravity of 0.87 or less because it decreases the crystallinity, causing a decrease of shrinkage rate or a decrease of heat resistance. A specific gravity of more than 0.95 is not preferable because it may lead to a decrease of efficiency during float-sink separation when, for example, the heat-shrinkable film is printed on as a label.

The melting point of the polypropylene resin can be controlled by adjusting the type or amount of α-olefin. In order to obtain the polypropylene resin composition having different melting point peaks in the two temperature ranges, it is preferable to mix copolymers of different melting points in appropriate proportions, or employ block copolymerization of α-olefins. Furthermore, when blending polypropylene resins with different melting points, it is preferable that the weight ratio of the resin with the lower melting point is 30 wt% or more and 85 % or less, more preferably 35 % or more but 80 % or less. The total fraction of α-olefins in the copolymer contained in the polypropylene resin composition is preferably 8 mol% or more to 24 mol% or less, more preferably 10 mol% or more to 22 mol% or less.

The polypropylene resin composition has a melt flow rate (MFR) at 230°C of 0.1 to 30 g/10 min, preferably 0.5 to 20 g/10 min, particularly preferably 1.0 to 15 g/10 min. AMFR of less than 0.1 g/min is not preferable because it leads to an increased pressure during extrusion, and an increased likelihood of streaking from a die. A MFR of more than 30 g/10 min is not preferable because it leads to a decrease of viscosity, and increases the likelihood of breakage, in addition to causing unstable discharge, or thickness unevenness due to a decreased stress during drawing. The melt flow rate can be measured using methods that comply with JIS-K-7210.

Various additives or fillers may be optionally added to the resin used in the invention, provided that such additives or fillers do not interfere with the properties. Examples include heat stabilizers, antioxidants, light stabilizers, antistatic agents, lubricants, nucleating agents, fire retardants, pigments, dyes, calcium carbonate, barium sulfate, magnesium hydroxide, mica, talc, clay, zinc oxide, magnesium oxide, aluminum oxide, antimicrobial agents, anti-fogging agents, and additives that impart natural decomposition properties. From the perspective of ease of handling and to impart slidability, antistatic properties, and heat blocking resistance, it is particularly preferable to add organic lubricants such as fatty acid amides; surfactants such as fatty acid alkylamines, fatty acid alkylamine esters, and fatty acid monoglyceride esters; and anti-blocking agents such as silica and PMMA. When adding a surfactant, the amount is appropriately adjusted to achieve the required antistatic properties, with an upper limit of 20,000 ppm. When adding an anti-blocking agent, the amount is adjusted within the range of 300 ppm or more to 10,000 ppm or less. Adding these components above these upper limits is not preferable because it leads to a decrease of haze, and a loss of transparency. It is also possible to contain components such as other thermoplastic resins, thermoplastic elastomers, and rubbers, provided that it is not detrimental to the properties of the film of the invention.

The film of the invention may be laminated with a layer of the same polypropylene resin or other resins, for example, a gas barrier resin layer of polyethylene, a saponified copolymer of ethylene and vinyl acetate, or polyvinyl alcohol, provided that it does not interfere with the film properties.

The film of the invention may optionally be subjected to a surface treatment, provided that it does not interfere with the properties of the invention. The surface treatment method is not particularly limited, and may be, for example, corona discharge, a plasma treatment, a flame treatment, or an acid treatment. Preferred are corona discharge, plasma treatment, and flame treatment because these can be continuously performed, and can be easily implemented before the winding process in the manufacture of the film. Corona discharge is particularly preferred as a means to improve the surface wetting tension.

A polypropylene heat-shrinkable film of the invention may be formed as a monolayer film, or may have a laminated structure of a skin layer and a core layer, or even more layers. Lamination can be achieved by, for example, multilayer co-extrusion. In the case of a laminated structure of two or more layers, it is preferable for each layer to be constituted of a polypropylene resin composition.

A polypropylene heat-shrinkable film of the invention has a thickness in the range of preferably 12 µm or more to 100 µm or less. More preferably, the film thickness ranges from 15 µm or more to 80 µm or less. A film thickness of 12 µm or less is not preferable because it leads to a decrease of firmness, and creates wrinkles when the film is attached as a label. A thickness of 100 µm or more is not preferable because it raises the raw material cost of film.

A packaged article of the invention is formed by thermally shrinking a label obtained from a heat-shrinkable polyester film of the invention and preferably having perforations or notches, after covering the label over at least a portion of the outer periphery of a subject of packaging. Examples of the packaging subject include PET bottles for beverages, various bottles and cans, plastic containers such as for snacks and lunch boxes, and paper boxes. Typically, when covering these packaging subjects by thermally shrinking a label obtained from the heat-shrinkable polypropylene film, the label is thermally shrunk by about 5% to 40% to attach it to the packaged article. The label to be applied over the packaging subject may or may not be printed on.

Various methods can be used to produce a label. When rolling a rectangular-shaped film and overlapping the edges, an organic solvent may be applied slightly inward from the edge of one side of the film to bond the film, or the film may be thermally fused by overlapping and fusing the edges using a thermal sealing technique such as heat sealing or seal and cut sealing. Alternatively, ultrasonic sealing can be used to thermally fuse the film. It is also possible to bond the film by applying various types of adhesives to the film edges, for example, such as by using hot melt adhesives, UV curable adhesives, low molecular weight polyolefins, solvent-based adhesives using chloroprene, acid-modified polyolefins, or chlorinated polyolefins, water-based adhesives using phenolic resins or polyvinyl acetate, or chemically reactive adhesives using epoxy resins, urethane resins, or silicon resins. These methods can be used according to the film processing method. When organic solvents, or liquid adhesives that are applicable to various films are used to bond the edges, the solvent or adhesive may be applied slightly inward from the edge of one side of the film in a film roll, and the film may be immediately rolled to overlap and bond the edges, before cutting the resulting tubular film into a label form.

The organic solvents used to bond a polypropylene film of the invention into a label may be, for example, aliphatic hydrocarbons such as normal hexane, normal heptane, cyclohexane, and methylcyclohexane, aromatic hydrocarbons such as toluene, xylene, and trimethylbenzene, halogenated hydrocarbons such as methylene chloride and chloroform, phenolic compounds such as phenol, furan compounds such as tetrahydrofuran, or mixed solvents of these. It is, however, preferable to use cyclohexane as the adhesion solvent because it can exhibit even higher solvent adhesion strength.

A polypropylene heat-shrinkable film of the invention needs to be a film with a widthwise direction thermal shrinkage rate (i.e., a rate of thermal shrinkage in hot water at 90°C) of 40% or more to 80% or less, as calculated from the formula 1 below from the length before and after shrinkage when subjected to processing under no load for 10 seconds in 90°C hot water. 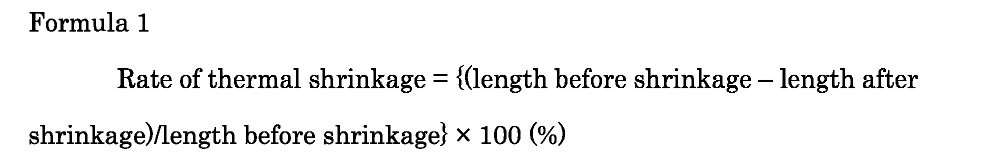 Rate of thermal shrinkage = {(length before shrinkage - length after shrinkage)/length before shrinkage} × 100 (%) Formula 1

A widthwise direction thermal shrinkage rate in hot water at 90°C of less than 40% is not preferable because such small shrinkage leads to wrinkles or looseness in the label after thermal shrinkage. The upper limit of the hot water thermal shrinkage rate is not particularly limited. However, the technically achievable upper limit is 80% in the invention. As for the lower limit, the widthwise direction thermal shrinkage rate in hot water at 90°C is preferably 42% or more, more preferably 45% or more, particularly preferably 50% or more.

A polypropylene heat-shrinkable film of the invention needs to have a lengthwise direction thermal shrinkage rate in hot water of 1% or more and 12% or less when subjected to processing under no load for 10 seconds in 90°C hot water. A lengthwise direction thermal shrinkage rate in hot water at 90°C of more than 12% is not preferable because it leads to large longitudinal shrinkage and tends to cause increased distortion when the film is used as a label. Also, a lengthwise direction thermal shrinkage rate is preferably close to 0%, but the technically achievable lower limit is 1% in the invention. The lengthwise direction shrinkage rate is more preferably 1% or more to 11% or less, particularly preferably 1% or more to 10% or less.

A polypropylene heat-shrinkable film of the invention has a haze of preferably 1% or more to 12% or less. A haze of more than 12% is not preferable because it makes the film low in transparency and visually unsuitable. The technically achievable lower limit of haze is 1% in the invention. The practically sufficient lower limit is 2%. As for the upper limit, the haze is more preferably 11% or less, particularly preferably 10% or less. It should be noted that the haze varies with the amount of additives such as lubricants, and the formation of spherocrystals can be reduced to achieve a lower haze by using polypropylene resulting from the copolymerization of the polypropylene resin composition with α-olefins. The haze is a measured value according to the method specified in JIS K7136.

A polypropylene heat-shrinkable film of the invention needs to have a widthwise direction natural shrinkage rate (a rate of dimensional change) of 3.0% or less after being aged for 672 hours in a 40°C, 65% RH atmosphere. The widthwise direction natural shrinkage rate is preferably 2.5% or less, more preferably 2.0% or less. With a natural shrinkage rate of 3.0% or less under 40°C, 65% RH, it is possible to reduce problems that may occur during secondary processing, such as dimensional changes over time when the film is stored at room temperature or in summer warehouses, or the occurrence of wrinkles or printing misalignment due to the shrinkage of the film over time during storage in a rolled state. A high widthwise direction natural shrinkage rate is not preferable because the available film width decreases during storage, leading to a decrease in yield during processing. Additionally, because the sides of the film are not secured along the width direction in a rolled state, the film tends to buckle due to natural shrinkage during storage, making the film susceptible to the formation of wavy wrinkles in the roll. The lower limit of natural shrinkage rate should be as closely to 0% as possible. However, in the invention, the technically achievable lower limit is 0.1%.

A polypropylene heat-shrinkable film of the invention needs to have a lengthwise direction natural shrinkage rate (a rate of dimensional change) of 1.0% or less after being aged for 672 hours in a 40°C, 65% RH atmosphere. The lengthwise direction natural shrinkage rate is preferably 0.8% or less, more preferably 0.6% or less. With a natural shrinkage rate of 1.0% or less under 40°C, 65% RH, it is possible to reduce the occurrence of wrinkles, sagging, and roll deformation due to tight winding caused by natural shrinkage when the film is stored at room temperature or in summer warehouses. The lower limit of natural shrinkage rate should be as closely to 0% as possible. However, in the invention, the technically achievable lower limit is 0.1%.

A polypropylene heat-shrinkable film of the invention preferably shows a heat absorption of 0.30 J/g or more to 0.95 J/g or less in non-reversing heat flow in a range of 20°C or higher and 60°C or lower, as measured by temperature-modulated differential scanning calorimetry (temperature-modulated DSC). With a heat absorption of 0.95 J/g or less, the natural shrinkage rate can be reduced to 3.0% or less. Smaller values of heat absorption are preferred because a further reduction of natural shrinkage rate is possible with smaller heat absorption. However, the technically achievable lower limit is 0.30 J/g in the invention. The upper limit is more preferably 0.90 J/g or less, particularly preferably 0.85 J/g or less. The following is a detailed description of the endothermic component.

The inventors of the invention investigated methods to reduce the time-dependent natural shrinkage of polypropylene heat-shrinkable films obtained through low-temperature drawing. It was found that the melting point and the heat of fusion associated with the thermal shrinkage rate observed at 70°C or higher temperatures are not usually correlated with the natural shrinkage rate. Additionally, because natural shrinkage occurs irreversibly over time at temperatures significantly lower than the melting point of resin, the present inventors speculated the possible involvement of the irreversible thermal properties observed at temperatures below room temperature due to the amorphous molecular chains were related.

To investigate this irreversible change, the inventors conducted temperature-modulated DSC to analyze the non-reversing heat flow of the polypropylene heat-shrinkable films being studied by the inventors. The analysis confirmed the presence of an endothermic peak in the 20°C to 60°C temperature range, which is lower than crystalline melting point. Additionally, the heat absorption associated with this endothermic peak was found to correlate positively with the natural shrinkage rate. In other words, the invention was completed based on the finding that the natural shrinkage rate can be controlled by controlling the heat absorption occurring in the 20°C to 60°C range. The method of controlling heat absorption will be described in the explanation of the film forming method below.

A polypropylene heat-shrinkable film of the invention has a widthwise direction refractive index (Ny) of preferably 1.490 or more to 1.530 or less, more preferably 1.500 or more to 1.520 or less as measured with an Abbe refractometer. An Ny of less than 1.490 is not preferable because it means alignment has hardly occurred, and the required hot water shrinkage rate cannot be obtained. An Ny of more than 1.530 is not preferable because it means a high degree of alignment with an increased number of high-melting-point crystals due to the aligned crystals, leading to a decrease of a widthwise direction hot water shrinkage rate.

In a polypropylene heat-shrinkable film of the invention, it is required that the difference (Ny - Nx) between the widthwise direction refractive index (Ny) and the lengthwise direction refractive index (Nx) be 0.005 or more to 0.028 or less, as measured with an Abbe refractometer. The difference is more preferably 0.006 or more to 0.026 or less, particularly preferably 0.007 or more to 0.023 or less. The upper limit is still more preferably 0.015 or less. It is possible to achieve both the required hot water shrinkage rate in a lengthwise direction and a widthwise direction and the perforation opening property in a lengthwise direction by drawing the film in such a way as to balance the lengthwise direction refractive index and the widthwise direction refractive index within this range.

The polypropylene heat-shrinkable film of the invention has a ratio (F10max/F30) between the maximum value of tensile stress (F10 max) at an elongation rate of 0 to 10% and the tensile stress at an elongation rate of 30% (F30) to be preferably 0.5 or more and 1.9 or less when subjected to a tensile test in the lengthwise direction. When the tensile stress in the elongation range of 0 to 10% is large and the tensile stress at the elongation rate of 30% is small, the film stretches more than tearing along the perforations when the film is torn along the perforations, and the film breaks during tearing, or the tear becomes more likely to be propagated in the direction away from the perforations. That is, if the tensile stress ratio is greater than 1.9, it is undesirable as it deteriorates the perforation opening property. And if the tensile stress ratio is less than 0.5, it is undesirable as the film tends to tear due to impact such as dropping during transportation when used as a packaging label. The tensile stress ratio is more preferably 0.6 or more and 1.8 or less, and further preferably 0.7 or more and 1.7 or less.

The polypropylene heat-shrinkable film of the invention needs to have a right-angled tear strength in the range of 100 mN/mm or more and 330 N/mm or less in a lengthwise direction when the film is subjected to 10% shrinkage in a widthwise direction in hot water at 80°C. When the right-angled tear strength is less than 100 mN/mm, the label may be easily torn due to impact such as dropping during transportation. When the tear strength exceeds 330 N/mm, it is undesirable as it may result in poor cuttability (ease of tearing) at the initial stage of tearing. The lower limit of right-angled tear strength is preferably 120 N/mm or more, more preferably 140 N/mm or more, and particularly preferably 150 N/mm or more. The upper limit of the right-angled tear strength is preferably 315 N/mm or less, more preferably 300 N/mm or less, and particularly preferably 280 N/mm or less.

As a result of intensive studies, the inventors have found a method of achieving both perforation opening property and reduction of shrinkage in the lengthwise direction by subjecting the film to lengthwise direction stretching and heat treatment under specific conditions. And the inventors have found that a high shrinkage rate can be obtained through the formation of a structure containing low-melting-point crystals aligned in the direction of drawing when the material is drawn in a widthwise direction at low temperatures after generating crystal components under controlled conditions in a low-melting-point range of 70°C or higher to 100°C or lower in a heat treatment and cooling process performed under predetermined conditions before drawing the material along the width direction. The inventors have also studied methods to reduce the natural shrinkage rate of the film drawn in the manner described above. The studies led to the discovery of a method whereby the natural shrinkage rate can be reduced when the drawn film is relaxed under appropriate conditions, without compromising the shrinkage rate obtained through drawing. These findings led to the completion of the invention. The following specifically describes the method.

For melt extrusion of the raw material resin, it is preferable to dry the polypropylene resin raw material with a dryer such as a hopper dryer or a paddle dryer, or with a vacuum dryer. After drying, the polypropylene resin raw material is melted at a temperature of 200 to 300°C, and extruded into a film form, using an extruder. Methods such as the T die method, tubular method, or other existing methods can be used for extrusion.

The sheet-shaped molten resin after extrusion can then be rapidly cooled to 30°C or less to obtain an undrawn film. For rapid cooling of the molten resin, it is preferable to use a method whereby the molten resin is cast onto a rotating drum through a spinneret with the drum being controlled at low temperature with a cooling chiller or similar device, and rapidly cooled to solidify into a substantially unoriented resin sheet.

Longitudinal drawing is performed after the undrawn sheet is obtained. For longitudinal drawing, the undrawn sheet is drawn after preheating with heated rolls by utilizing the speed difference between the rolls. Drawing may be performed in two or more stages. Preferably the sheet is drawn at a roll temperature of 50°C or higher to 100°C or lower. More preferably, the temperature of the first-stage stretching roll be set at least 10°C or higher than the temperature of the second-stage stretching roll. By stretching the film in two stages with such a temperature pattern, the stress received by the film during the stretching process can be reduced, the increase in shrinkage in the longitudinal direction can be reduced, and the perforation opening property can be improved. In addition, by increasing the temperature in the first stage and decreasing the temperature in the second stage, the stretching stress at the yield point can be reduced, thereby increasing the stress in the latter part of the stretching process. This adjustment also makes it easier to improve the perforation opening property in the resulting film by reducing the tensile stress ratio mentioned above. A roll temperature of less than 50°C is not preferable because it tends to cause film slipping and unstable drawing. A roll temperature higher than 100°C is not preferable because it can cause problems such as an increased likelihood of the film adhering to the heated rolls, and wrapping itself around the rolls. The roll temperature is more preferably 55°C or higher to 90°C or lower.

The lengthwise direction draw rate is preferably adjusted to 1.1 or more to 1.8 or less for the first stage and 1.2 or more to 3.0 or less for the second stage so as to the drawing ratio in the second stage is higher than the drawing ratio in the first stage. Setting the second stage drawing ratio higher than the first stage drawing ratio makes it easy to reduce thickness unevenness in a lengthwise direction. The lengthwise direction drawing rate for the first stage is preferably 1.15 or more to 1.6 or less and more preferably 1.2 or more to 1.5 or less. The lengthwise direction drawing rate for the second stage is preferably 1.3 or more to 2.7 or less and more preferably 1.5 or more to 2.3 or less. The total drawing ratio of the first stage drawing rate and the second stage drawing ratio is preferably set to 1.2 or more to 5.0 or less. The total drawing ratio of more than 5.0 is not preferable because it becomes difficult to reduce the shrinkage rate and natural shrinkage in the lengthwise direction, and the shrink finish property and the appearance during roll storage tend to deteriorate. Also, the total drawing ratio of less than 1.2 is not preferable because it tends to deteriorate the perforation opening property. The total drawing ratio is preferably 1.3 or more and 4.2 or less and more preferably 1.4 or more and 4.0 or less.

A relaxation process in the lengthwise direction (MD relax) is preferably performed for reducing the hot water shrinkage and natural shrinkage in the lengthwise direction. As the MD relaxation process following method can be suitably used such as a method of shrinking the film by reducing the speed between the rolls while heating the film on the transport rolls with hot air or an infrared heater; a method of shrinking the film by narrowing the clip pitch while heating in a tenter; or a method of shrinking the film by reducing clip speed in a tenter having driven clips. Moreover, the MD relaxation process can be performed either before stretching in the widthwise direction or after stretching in the widthwise direction. The relaxation rate is preferably adjusted to in the range of 3% or more and 50% or less and more preferably in the range of 5% or more and 40% or less. The relaxation rate of less than 3% is not preferable because it leads to increase the natural shrinkage rate in the lengthwise direction. Also, the relaxation late of more than 50% is not preferable because it deteriorates perforation opening property and increases the equipment cost due to the large equipment required for a longer heating time during the relaxation process.

The following is a detailed description of the preferred conditions for the widthwise direction drawing and the processes before and after it.

### (1) Heat treatment before widthwise direction drawing

In the film production of the invention, it is preferable to perform a heat treatment at a temperature of 100°C or higher to 140°C or lower for the duration of 3.0 seconds or more to 50.0 seconds or less, before drawing the film along the width direction. For the heat treatment, the film may be heated while being transported on a line provided for heat treatment, using, for example, heated air or a ceramic heater. Alternatively, the film may be heated with the clips gripping the film edges along the width direction in a tenter, before the film is drawn in a widthwise direction. The heat treatment selectively generates crystal components having a melting point in the low temperature range of 70°C or higher to 100°C or lower, allowing for the retention of the low-melting-point crystal components even after drawing along the width direction. This enables the production of a highshrinkage heat-shrinkable film. The heat treatment also has the effect of reducing the lengthwise direction shrinkage rate.

The temperature of intermediate heat treatment in excess of 140°C is not preferable because it encourages the formation of crystal components with a high melting point of 100°C or higher, and leads to a decrease in the rate of shrinkage after widthwise direction drawing. Conversely, a heat treatment temperature of less than 100°C is not preferable because it leads to hardly any formation of low-melting-point crystal components by heat treatment, and tends to decrease the shrinkage rate during widthwise direction drawing. Additionally, a heat treatment temperature of less than 100°C is not preferable because it becomes difficult to reduce the lengthwise direction shrinkage rate. The lower limit of heat treatment temperature is preferably 105°C or more, more preferably 110°C or more. The upper limit of heat treatment temperature is preferably 135°C or less, more preferably 130°C or less. Preferably, the duration of heat treatment is appropriately adjusted within the range of 1.0 second or more to 50.0 seconds or less, depending on the composition of the raw material.

### (2) Cooling and widthwise direction drawing after heat treatment

Preferably, the film is cooled to 70°C or less after the heat treatment, before drawing the film along the width direction. Such cooling allows for the retention of low-melting-point crystal components. After cooling, the film is preferably drawn in a widthwise direction at a rate of 2.5 or more to 10.0 or less, with the clips gripping the film edges along the width direction in a tenter. The upper limit of transverse draw rate is more preferably 9.0 or less, particularly preferably 8.0 or less.

Drawing may be performed in two or more stages. Specifically, the film is drawn in a widthwise direction inside a tenter twice, with a no draw zone provided in between. The draw rate for the first drawing is preferably 1.5 or more to 7 or less, more preferably 2 or more to 5.5 or less. The draw rate for the second drawing is preferably 1.5 or more to 5 or less, more preferably 1.8 or more to 3.5 or less. The rate in each stage is adjusted within these ranges to ensure that the total draw rate ranges from 2.5 or more to 10.0 or less. By separately drawing the film in this fashion, it is possible to more easily reduce an increase in natural shrinkage rate due to drawing, in addition to reducing the occurrence of breakage during drawing.

Preferably, drawing is performed in the temperature range of 50°C or higher to 100°C or lower. A drawing temperature of lower than 50°C is not preferable because it can lead to the generation of small voids during drawing, resulting in high haze and increased susceptibility to breakage. Conversely, a drawing temperature of higher than 100°C is not preferable because it not only causes the melting of low-melting-point crystal components, leading to a decrease of widthwise direction shrinkage rate, but also increases the occurrence of thickness variations along the width direction.

The lower limit of widthwise direction drawing temperature is more preferably 55°C or higher, particularly preferably 60°C or higher. The upper limit of transverse drawing temperature is more preferably 90°C or lower, particularly preferably 85°C or lower.

### (3) Widthwise direction relaxation process (TD relaxation process)

In the transverse drawing film production of the invention, it is required that the film, after being drawn in the widthwise direction in the manner described above, be relaxed and shrunk (relaxation) at a temperature of 60°C or higher to 100°C or lower for the duration of 0.5 seconds or more to 20.0 seconds or less by narrowing the tenter in a widthwise direction with the clips gripping the film edges along the width direction inside the tenter so that the relaxation rate, determined from formula 2, ranges from 13% to 40% in length along the width direction. 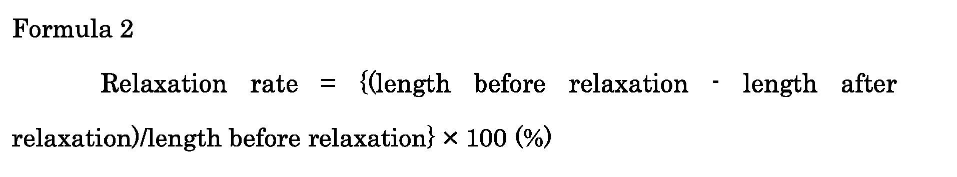 Relaxation rate = {(length before relaxation - length after relaxation)/length before relaxation} × 100 (%) Formula 2

A relaxation temperature of lower than 60°C is not preferable because the film may not sufficiently shrink and wrinkles may occur. A relaxation temperature higher than 100°C is not preferable because it results in a greater reduction of shrinkage rate, leading to insufficient shrinkage when the film is used as a heat-shrinkable film. The preferred temperature for the relaxation process is 65°C or higher to 95°C or lower, particularly preferably 70°C or higher to 90°C higher.

Narrowing the length by less than 13% along the width direction in the relaxation process is not preferable because it leads to an increased natural shrinkage rate. A relaxation rate higher than 40% is not preferable because it leads to a decrease of productivity, in addition to decreasing the shrinkage rate at 90°C. The relaxation rate in the relaxation process is more preferably 15% or higher to 35% or lower, particularly preferably 17% or higher to 33% or lower.

The relaxation process enables a reduction of the natural shrinkage rate by reducing the above-mentioned heat absorption of non-reversing heat flow while maintaining the required shrinkage rate as a heat-shrinkable film, while leaving the low-melting-point crystal components in the final film. The relaxation process may be separately performed after each drawing when the film is drawn in a widthwise direction in two or more stages. Aside from narrowing the tenter along the width direction, the relaxation process may be performed by winding the film as it undergoes shrinkage along the width direction as a result of when the clips gripping the film edges are released near the exit point of the tenter while heat is being applied.

### EXAMPLES

The following is a more detailed description of the invention based on Examples. However, the invention is not limited to the aspects of the following Examples, and can be appropriately modified within the purpose and intent of the invention. Tables 1 and 2 present the raw materials and the formulations of the raw materials used in Examples and Comparative Examples, along with the film production conditions (such as drawing conditions and heat treatment conditions). The resin raw materials PP1 to PP4 in Table 1 are as follows.
· Resin raw material PP1: a polypropylene-butene random copolymer (manufactured by Mitsui Chemicals, Inc., product name TAFMER XM7070, MFR = 7.0 g/10 min, melting point 77°C, specific gravity 0.88)
· Resin raw material PP2: a polypropylene-butene random copolymer (manufactured by Mitsui Chemicals, Inc., product name TAFMER XM7080, MFR = 7.0 g/10 min, melting point 83°C, specific gravity 0.88)
· Resin raw material PP3: a polypropylene-ethylene random copolymer (manufactured by Japan Polypro Corporation, product name NOVATEC EG6D, MFR = 1.9 g/10 min, melting point 145°C, specific gravity 0.90)
· Resin raw material PP4: polypropylene (manufactured by Sumitomo Chemical Co., Ltd., product name FS2011DG3, MFR = 2.5 g/10 min, melting point 159°C, specific gravity 0.91)

Note that the MFR values are values at 230°C
The film evaluation methods are as follows.

### [Tm (Melting Point)]

Five milligrams of a film was collected on an aluminum pan, and the heat flow (unit: W/g) at each temperature was measured at a sampling interval of 0.5 seconds while heating the film from -40°C to 200°C at a rate of temperature increase of 10°C/min, using a Shimadzu differential scanning calorimeter (model: DSC60). A heat flow curve was obtained by plotting the heat flow on the vertical axis (with the negative direction indicating heat absorption) and temperature on the horizontal axis (unit: °C).

A regression line was created using values within the range of 55 to 60°C of the heat flow curve. For the heat flow, the value on the heat flow curve was subtracted from the value on the regression line to determine the difference at each temperature, in ascending order from 60°C to 175°C. The temperature at which the difference first exceeded 0.001 W/g was defined as the melting start temperature.

Similarly, a regression line was created using values within the range of 175°C to 180°C of the heat flow curve. For the heat flow from 175°C to 60°C, the value on the heat flow curve was subtracted from the value on the regression line to determine the difference, in descending order from higher temperature. The temperature at which the difference first exceeded 0.001 W/g was defined as the melting end temperature.

A baseline was established by drawing a straight line passing through the points on the heat flow curve at the melting start temperature and melting end temperature. For the heat flow at each temperature between 70°C and 170°C, the value on the heat flow curve was subtracted from the value on the baseline to determine the difference. Among these differences at different temperatures, the values greater than 0.02 W/g and representing maxima with respect to temperature were determined as the melting peaks on the heat flow curve, and the temperatures at the melting peaks were defined as the melting points.

### [Heat Absorption in Non-Reversing Heat Flow in Temperature-Modulated DSC]

A film was weighed at 5 mg inside a T-ZERO pan, and heated in heatonly mode from -40°C to 200°C at an average rate of temperature increase of 2°C/min with a modulation period of 40 seconds, using a temperature-modulated differential scanning calorimeter (TM DSC) DSC250 (manufactured by TA instruments). The non-reversing heat flow was measured at a sampling interval of 0.1 seconds, and a non-reversing heat flow curve was obtained by taking non-reversing heat flow (unit: W/g, with the negative direction indicating heat absorption) on the vertical axis and temperature on the horizontal axis (unit: °C).

A regression line was created from values in the 18 to 20°C range of the non-reversing heat flow curve. For the non-reversing heat flow, the value on the non-reversing heat flow curve was subtracted from the value on the regression line to determine the difference, in ascending order from 20°C to 60°C. The temperature at which the difference first reached or exceeded 0.0005 W/g was defined as the melting start temperature.

Similarly, a regression line was created from values on the non-reversing heat flow curve in the 60°C to 62°C range. The value on the non-reversing heat flow curve was subtracted from the value on the regression line to determine the difference, in descending order from 60°C to 20°C. The temperature at which the difference first reached or exceeded 0.0005 W/g was defined as the heat absorption end temperature.

A baseline was established by drawing a straight line connecting the points on the non-reversing heat flow curve at the heat absorption start temperature and heat absorption end temperature. The area enclosed by the non-reversing heat flow curve and the baseline was determined as the peak heat absorption (unit: J/g).

### [Identification of α-Olefin Components]

The types of α-olefins such as ethylene and butene in the propylene-α-olefin copolymers are determined by 13C NMR spectroscopy, following the method described in pages 615 to 617 of the Polymer Analysis Handbook (published by Kinokuniya Shoten, 1995). The types of α-olefins can also be determined by IR spectroscopy following the method described in Section (i) Random Copolymers in page 256 of this handbook.

### [Thermal Shrinkage Rate (Hot Water Thermal Shrinkage Rate)]

The film was cut into a 10 cm × 10 cm square, parallel to the direction of unrolling. (In the following, the direction of unrolling before cutting is referred to as longitudinal direction, and the direction perpendicular to the unrolling direction on the film surface is referred to as the width direction in the cut film.) The cut film was immersed and thermally shrunk in hot water (± 0.5°C around the predetermined temperature) for 10 seconds under no load. The film was then immersed in 23°C ± 0.5°C water for 10 seconds, removed from water, and measured for its longitudinal and widthwise direction dimensions. The thermal shrinkage rate was determined for each direction using the formula 1 above.

### [Natural Shrinkage Rate]

The film was cut into a 210 mm × 210 mm square shape, parallel to the direction of unrolling. After drawing a 200 mm reference line along the length and width of the cut sample, the film was left to stand for 672 hours in a 40°C, 65% RH atmosphere for aging. Each of the natural shrinkage rate of widthwise direction and the natural shrinkage rate of the lengthwise direction is determined using the formula 3 below. 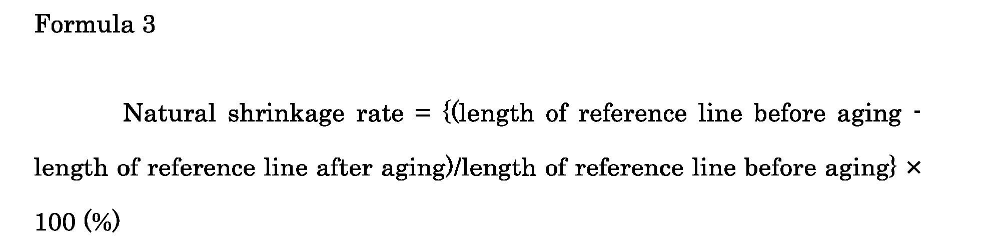 Natural shrinkage rate = {(length of reference line before aging - length of reference line after aging)/length of reference line before aging} × 100 (%) Formula 3

### [Haze]

The haze was measured in a 23°C atmosphere following JIS K 7136, using a haze meter (300A manufactured by Nippon Denshoku Industries Co., Ltd.). The measurement was conducted twice, and the mean value was determined.

### [Tensile Test]

A test specimen with a shape of 15 mm in a widthwise direction and 100 mm in a lengthwise direction in accordance with JIS K 7127 was prepared. Next, both ends (in the lengthwise direction) of the test specimen were gripped by a universal tensile testing machine ( " Autograph" manufactured by SHIMADZU CORPORATION) with an adjustment of the distance between chucks to 20 mm. The tensile test was performed under the condition of a tensile speed of 200 mm/minute, a maximum tensile stress (F10 max) at an elongation of 0 to 10% and a stress value (F30) at an elongation of 30% were calculated.

### [Right-Angled Tearing Strength]

A test specimen with a specified size in accordance with JIS K 7128 is prepared after a film is shrunk by 10% in the widthwise direction in hot water adjusted to 80°C. Next, both ends of the test specimen were made to be grasped with a universal tensile testing machine ( " Autograph" manufactured by SHIMADZU CORPORATION), the tensile test was performed under the condition of a tensile speed of 200 mm/minute, and a strength at the time of being torn apart in a direction perpendicular to the main shrinking direction of the film was measured. The right-angled tearing strength per unit thickness was calculated by the following formula 4. 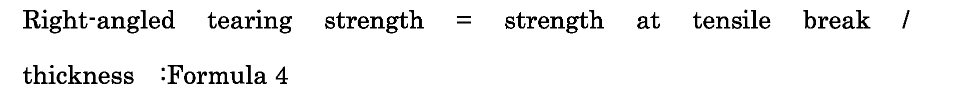 Right-angled tearing strength = strength at tensile break / thickness : Formula 4

### [Specific Gravity]

The specific gravity of the film was calculated as a ratio of the film density to the density of water at 23°C. The film density was measured by the density gradient column method in compliance with JIS K7112.

### [Refractive Index]

The sample film was left to stand in a 23 ± 2°C, 65 ± 5% RH atmosphere for 2 hours or more before shrinkage, and its refractive index (Nx, Ny) was measured both in the lengthwise and the widthwise directions, using the Abbe refractometer, Model 4T, manufactured by Atago Co., Ltd.

### [Shrink Finish]

### [Shrinkage Distortion of Label]

A heat-shrinkable film with a pre-defined grid pattern with 10 mm intervals was formed into a cylindrical label (a label with the main shrinkage direction of heat-shrinkable film aligned with the circumferential direction) by joining the edges with a 5 mm overlap and heat sealing and cutting the film with an impulse sealer HAKKO 311 (manufactured by Hakko Corporation). The label was placed around a 500 ml PET bottle (with a body diameter of 67 mm, and a minimum diameter of 25 mm at the neck, product name *Jyuroku-cha*), and attached to the bottle by thermally shrinking the label for 10.0 seconds through a steam tunnel (Model SH-1500-L, manufactured by Fuji Astec Inc.) with a zone temperature of 85°C. In attaching the label, adjustments were made so that one end of the label was situated at a portion of the neck with 43 mm diameter. The finish after shrinkage was evaluated by measuring the extent of displacement from the horizontal plane of the grid pattern over 360 degrees on the attached film at the body of the bottle, excluding the grids including the sealed and cut portion, and the maximum distortion value was determined from the measured displacement representing the distortion. The evaluation was conducted according to the following criteria.
Excellent: Maximum distortion is less than 1.0 mm
Good: Maximum distortion is 1.0 mm or more and less than 2.0 mm
Poor: Maximum distortion is 2.0 mm or more

### [Wrinkles on Labels]

A label was attached to a PET bottle under the same conditions used in the evaluation of label shrinkage distortion, and the state of generated wrinkles was evaluated according to the following criteria.
Excellent: Zero wrinkles 2 mm or larger in size
Good: One or two wrinkles 2 mm or larger in size
Poor: Three or more wrinkles 2 mm or larger in size

### [Perforation Opening Property]

Under the same conditions as those for the shrinkage distortion of the label mentioned above, a label to which perforations were previously provided in the direction orthogonal to the main shrinkage direction was mounted to a PET bottle. The perforation was formed by providing a hole of 1 mm long in the intervals of 1 mm, and two lines of perforations were provided in width 22 mm and length 170 mm in the lengthwise direction of the label (height direction). Thereafter, this bottle was filled with 500 ml of water, cooled at 5° C., and perforations of the label of the bottle immediately after taking it out from a refrigerator were torn with fingertips, and the number of bottles that could not be torn cleanly along the perforations in the lengthwise direction or that were unable to remove label from the bottle due to the label breaking during the tearing process was counted. And a ratio (%) relative to the total samples of 50 was calculated as a perforation opening defective ratio. If the perforation opening defective ratio is 20% or less, the result is acceptable for practical use.

### [Appearance Evaluation of Rolls over Time]

### (Appearance change after 672 hour storage at 40°C)

The film was slit and wound into a roll measuring 300 mm in width with a film length of 300 m. The roll was placed in a constant-temperature chamber that had been adjusted to create an atmosphere having a temperature of 40°C with 65 ± 10% RH. After being stored for 672 hours, the roll was removed from the chamber, and the state of wrinkles on a 3 m unrolled portion of the film was evaluated according to the following criteria.
Excellent: Zero wrinkles 1 cm or larger in size
Good: One or two wrinkles 1 cm or larger
Poor: Three or more wrinkles 1 cm or larger

### [Evaluation of Adequacy for Float-Sink Separation]

The film was cut into a square shape measuring 100 mm × 100 mm. Two liters of water was added into a cylindrical container having a bottom diameter of 130 mm, and, after adjusting the water temperature to 23°C ± 2°C, the film was submerged to the bottom of the container while taking care to prevent the formation of bubbles on the film. The film was then visually evaluated for its buoyancy according to the following criteria.
Good: The film floated up to the water surface
Poor: The film did not float up to the water surface

### [Example 1]

Polypropylene resins PP1 and PP3 were dry blended through an extruder at a weight ratio of 60/40, and 500 ppm of SiO₂ (Silysia 266 manufactured by Fuji Silysia Chemical Ltd.) was added as a lubricant to the mixture. This material was melt extruded at 230°C, and was rapidly cooled by winding it around a rotating metal roll that had been cooled to 20°C. This resulted in an undrawn film (a polypropylene resin sheet) having a thickness of 370 µm. Here, the film was taken up at a rate of about 5.0 m/min (the rotation speed of the metal roll).

Next, thus obtained undrawn film was guided into a longitudinal drawing machine having multiple sets of rolls continuously disposed therein. After preheating to a film temperature of 65°C on a preheating roll, the film was drawn 1.3 times for the first-stage stretching between rolls having a surface temperature of 75°C with setting a roll speed of 6.5 m/min for a high-speed drawing roll. And then the film was drawn 2.0 times between rolls having surface temperature of 60°C with setting a roll speed of 13.0 m/min for a high-speed drawing roll, and the total drawing ratio was 2.6. Then the film was conveyed on a roll having the surface temperature set at 60°C. The roll was slowed down to 11.0 m/min while blowing hot air set at 95°C, and 15% relaxation treatment in the longitudinal direction was performed to obtain a longitudinal uniaxially drawn film with 168 µm thick.

Subsequently, the longitudinal uniaxially film was subjected to a heat treatment in a heat treatment zone provided on a conveyer line having multiple sets of rolls continuously disposed thereon. In the heat treatment zone, the film was heated with heated air until the film temperature reached 125°C. The film was then air cooled to 60°C, and guided into a tenter having a transverse drawing zone and a relaxation process zone continuously provided therein.

After preheating to a film temperature of 60°C, the film was drawn twice along the width direction in the transverse drawing zone, first at a rate of 3.0 at 60°C, then at a rate of 2.2 at 60°C. The film was then subjected to a relaxation process at 75°C for 7 seconds in the relaxation process zone, resulting in a 20% relaxation. This produced a biaxially drawn film having a thickness of 30 µm.

After the transverse drawing, the film was wound around a paper tube after slitting the edges, producing a film roll having a predetermined length of a biaxially drawn film (polypropylene heat-shrinkable film) rolled around it with a film width of 500 mm and a film thickness of 30 µm. The film was then evaluated for its properties using the methods described above. The evaluation result is presented in Table 2.

### [Example 2]

A biaxially drawn film with a thickness of 30 µm was produced using the same method used in Example 1, except that the thickness of an undrawn film was changed to 439 µm by adjusting discharge amount and the total drawing ratio was changed to 3.0 by adjusting drawing ratio to 1.5 times for the first-stage stretching in the longitudinal direction. The evaluation result is presented in Table 2.

### [Example 3]

A biaxially drawn film with a thickness of 30 µm was produced using the same method used in Example 1, except that the thickness of an undrawn film was changed to 521 µm by adjusting discharge amount and the total drawing ratio was changed to 3.6 by adjusting drawing ratio to 1.8 times for the first-stage stretching in the longitudinal direction. The evaluation result is presented in Table 2.

### [Example 4]

A biaxially drawn film with a thickness of 30 µm was produced using the same method used in Example 1, except that the thickness of an undrawn film was changed to 252 µm by adjusting discharge amount, the total drawing ratio was changed to 1.6 by adjusting drawing ratio in the longitudinal direction to 1.2 times for the first-stage stretching and 1.3 times for the second-stage stretching, and relaxation rate in longitudinal direction was changed to 5%. The evaluation result is presented in Table 2.

### [Example 5]

A biaxially drawn film with a thickness of 30 µm was produced using the same method used in Example 1, except that the thickness of an undrawn film was changed to 353 µm by adjusting discharge amount and relaxation rate in longitudinal direction was changed to 20%. The evaluation result is presented in Table 2.

### [Example 6]

A biaxially drawn film with a thickness of 30 µm was produced using the same method used in Example 1, except that the thickness of an undrawn film was changed to 393 µm by adjusting discharge amount and relaxation rate in longitudinal direction was changed to 10%. The evaluation result is presented in Table 2.

### [Example 7]

A biaxially drawn film with a thickness of 30 µm was produced using the same method used in Example 1, except that polypropylene resins for dry blended material was changed to PP1 and PP4 mixed at a weight ratio of 60/40. The evaluation result is presented in Table 2.

### [Example 8]

A biaxially drawn film with a thickness of 30 µm was produced using the same method used in Example 1, except that polypropylene resins for dry blended material was changed to PP2 and PP3 mixed at a weight ratio of 60/40. The evaluation result is presented in Table 2.

### [Example 9]

A biaxially drawn film with a thickness of 30 µm was produced using the same method used in Example 1, except that polypropylene resins for dry blended material was changed to PP1 and PP3 mixed at a weight ratio of 70/30. The evaluation result is presented in Table 2.

### [Example 10]

A longitudinal uniaxially film obtained by longitudinally drawing an undrawn film was produced using the same method used in Example 1. Subsequently, the longitudinal uniaxially film was subjected to a heat treatment in a heat treatment zone provided on a conveyer line having multiple sets of rolls continuously disposed thereon. In the heat treatment zone, the film was heated with heated air until the film temperature reached 125°C. The film was then air cooled to 60°C, and guided into a tenter having a transverse drawing zone and a relaxation process zone continuously provided therein. After preheating to a film temperature of 60°C, the film was drawn twice along the width direction in the transverse drawing zone, first at a rate of 3.0 at 60°C, then at a rate of 2.2 at 60°C. The film was then processed in the relaxation treatment zone by performing a 15% relaxation treatment in the widthwise direction at 75° C. for 7 seconds and a 15% relaxation treatment in the longitudinal direction by narrowing the distance between the clips to obtain a biaxially drawn film having a thickness of 30 µm. The evaluation result is presented in Table 2.

### [Example 11]

A biaxially drawn film with a thickness of 30 µm was produced using the same method used in Example 1, except that a temperature of the relaxation process after the drawing in widthwise direction was changed to 80°C. The evaluation result is presented in Table 2.

### [Example 12]

A biaxially drawn film with a thickness of 30 µm was produced using the same method used in Example 1, except that a temperature of the relaxation process after the drawing in widthwise direction was changed to 85°C. The evaluation result is presented in Table 2.

### [Comparative Example 1]

An undrawn film, 168 µm thick, was obtained under the same conditions used in Example 1, with the sole exception of the different discharge amount. Subsequently, the undrawn film was subjected to a heat treatment in a heat treatment zone provided on a conveyer line having multiple sets of rolls continuously disposed thereon. In the heat treatment zone, the film was heated with heated air until the film temperature reached 125°C. The film was then air cooled to 60°C, and guided into a tenter having a transverse drawing zone and a relaxation process zone continuously provided therein. After preheating to a film temperature of 60°C, the film was drawn twice along the width direction in the transverse drawing zone, first at a rate of 3.0 at 60°C, then at a rate of 2.2 at 60°C. The film was then processed in the relaxation treatment zone by performing a 15% relaxation treatment in the widthwise direction at 75° C. for 7 seconds to obtain a transverse uniaxially drawn film having a thickness of 30 µm. The evaluation result is presented in Table 2. The film had a high defect rate when opened at the perforations since the film was not stretched in the longitudinal direction.

### [Comparative Example 2]

A biaxially drawn film with a thickness of 30 µm was produced using the same method used in Example 1, except that a temperature of the heat treatment before the transverse drawing was changed to 95°C. The evaluation result is presented in Table 2. However, the hot water shrinkage rate in the longitudinal direction was high, the film was greatly distorted by vertical warping at the time of shrinkage finish, and the film had an inferior appearance at the time of shrinkage finish.

### [Comparative Example 3]

A biaxially drawn film with a thickness of 30 µm was produced using the same method used in Example 1, except that the thickness of an undrawn film was changed to 437 µm by adjusting discharge amount and relaxation in longitudinal direction was not conducted. The evaluation result is presented in Table 2. Because the film had the high natural shrinkage in the longitudinal direction, wrinkles were generated when the stored film roll was unrolling after a lapse of time, and the film was inferior in practical use.

### [Comparative Example 4]

A biaxially drawn film with a thickness of 30 µm was produced using the same method used in Example 1, except that the thickness of an undrawn film was changed to 437 µm by adjusting discharge amount and relaxation in widthwise direction was not conducted. The evaluation result is presented in Table 2. Because the film had the high natural shrinkage in the widthwise direction, wavy wrinkles in the widthwise direction were generated when the stored film roll was unrolling after a lapse of time, and the film was inferior in practical use.

As can be clearly seen in Table 2, the films obtained in Examples 1 to 12 all exhibited high shrinkability along the width direction and low shrinkability along the longitudinal direction orthogonal to it, producing a desirable shrink finish and exhibited excellent perforation opening property. With the relaxation process, it was possible to reduce the natural shrinkage rate, producing hardly any wrinkles after aging, and making the film suitable as a heat-shrinkable film for practical use. Additionally, because of the sole use of polypropylene resins, the specific gravity was considerably low, making the film suitable for float-sink separation from PET bottles. In contrast, the films obtained in Comparative Examples 1 to 4 did not possess properties adequate enough for practical use as heat-shrinkable films as shown in Table 2 and in the descriptions of the respective comparative examples.

**[Table 1]**

| | MFR (230°C g/ 10min) | Melting point (°C) | Specific gravity |
|---|---|---|---|
| PP1 | 7.0 | 77 | 0.88 |
| PP2 | 7.0 | 83 | 0.88 |
| PP3 | 1.9 | 145 | 0.90 |
| PP4 | 2.5 | 159 | 0.91 |

**[Table 2A]**

| | | | Ex. 1 | Ex. 2 | Ex. 3 | Ex. 4 | Ex. 6 | Ex. 6 | Ex. 7 | Ex. 8 |
|---|---|---|---|---|---|---|---|---|---|---|
| Resin composition (mass%) | PP1 | | 60 | 60 | 60 | 60 | 60 | 60 | 60 | 0 |
| | PP2 | | 0 | 0 | 0 | 0 | 0 | 0 | 0 | 60 |
| | PP3 | | 40 | 40 | 40 | 40 | 40 | 40 | 0 | 40 |
| | PP4 | | 0 | 0 | 0 | 0 | 0 | 0 | 40 | 0 |
| | PP6 | | 0 | 0 | 0 | 0 | 0 | 0 | 0 | 0 |
| MD drawing | First preheating temperature (°C) | | 75 | 76 | 76 | 76 | 75 | 75 | 75 | 76 |
| | First draw rate (fold change) | | 1.3 | 1.5 | 1.8 | 1.2 | 1.3 | 1.3 | 1.3 | 1.3 |
| | Second preheating temperature (°C) | | 60 | 60 | 60 | 60 | 60 | 60 | 60 | 60 |
| | Second draw rate (fold change) | | 2 | 2 | 2 | 1.3 | 2 | 2 | 2 | 2 |
| | Total drawing ratio (fold change) | | 2.6 | 3.0 | 3.6 | 1.6 | 2.6 | 2.6 | 2.6 | 2.6 |
| MD relaxation | Relaxation rate in a lengthwise direction(%) | | 15 | 16 | 16 | 5 | 20 | 10 | 15 | 16 |
| | Rate at MD exit (fold change) | | 2.2 | 2.6 | 3.1 | 1.6 | 2.1 | 2.3 | 2.2 | 2.2 |
| Heat-treatment | Heat-treatment temp, (°C) | | 126 | 126 | 125 | 125 | 125 | 126 | 126 | 126 |
| TD drawing | Temp. after intermediate cooling (°C) | | 60 | 60 | 60 | 60 | 60 | 60 | 60 | 60 |
| | First drawing conditions | Drawing temp. (° C) | 60 | 60 | 60 | 60 | 60 | 60 | 60 | 60 |
| | | Draw rate (fold change) | 3 | 3 | 3 | 3 | 3 | 3 | 3 | 3 |
| | Second drawing conditions | Drawing temp. (°C) | 60 | 60 | 60 | 60 | 60 | 60 | 60 | 60 |
| | | Draw rate (fold change) | 2.2 | 2.2 | 2.2 | 2.2 | 2.2 | 2.2 | 2.2 | 2.2 |
| | Total draw rate (fold change) | | 6.6 | 6.6 | 6.6 | 6.6 | 6.6 | 6.6 | 6.6 | 6.6 |
| TD relaxation | Relaxation temperature (°C) | | 75 | 76 | 76 | 76 | 75 | 75 | 75 | 76 |
| | Relaxation rate in a widthwise direction (%) | | 15 | 15 | 15 | 15 | 15 | 15 | 15 | 15 |
| | Rate at TD exit (fold change) | | 5.6 | 5.6 | 6.6 | 5.6 | 5.6 | 5.6 | 6.6 | 6.6 |
| | Relaxation rate in a lengthwise direction(%) | | 0 | 0 | 0 | 0 | 0 | 0 | 0 | 0 |
| Thickness (µm) | | | 30 | 30 | 30 | 30 | 30 | 30 | 30 | 30 |
| Rate of thermal shrinkage 90°C (%) | Lengthwise | | 7.5 | 9.7 | 11.9 | 2.7 | 5.3 | 9.2 | 8.3 | 8.8 |
| | Widthwise | | 60.8 | 69.9 | 60.1 | 68.9 | 60.2 | 61.9 | 45.8 | 67.4 |
| Tensile stress in a lengthwise direction (MPa) | Maximum tensile stress at an elongation rate of 0 to 10% (F10 max) | | 13.1 | 12.6 | 11.4 | 17.4 | 13.7 | 12.9 | 15.1 | 14.6 |
| | Tensile stress at an elongation rate of 30% (F30) | | 14.5 | 16.1 | 17.8 | 10.6 | 14.1 | 14.8 | 13.8 | 14.3 |
| | Tensile stress ratio(MAX F10/F30) | | 0.9 | 0.8 | 0.6 | 1.6 | 1.0 | 0.9 | 1.1 | 1.0 |
| Right-angled tearing strength (mN/m) | | | 213 | 172 | 136 | 284 | 224 | 203 | 226 | 246 |
| Haze (%) | | | 3.5 | 3.1 | 3.8 | 3.3 | 3.1 | 3.9 | 3.6 | 3.7 |
| Specific gravity | | | 0.89 | 0.89 | 0.89 | 0.89 | 0.89 | 0.89 | 0.91 | 0.90 |
| Refractive index | Nx | | 1.492 | 1.494 | 1.496 | 1.486 | 1.491 | 1.493 | 1.494 | 1.494 |
| | Ny | | 1.503 | 1.502 | 1.501 | 1.509 | 1.501 | 1.502 | 1.506 | 1.511 |
| | Ny-Nx | | 0.011 | 0.008 | 0.006 | 0.024 | 0.010 | 0.009 | 0.012 | 0.017 |
| DSC melting point (°C) | Low-temp, side | | 89 | 89 | 89 | 89 | 89 | 89 | 96 | 94 |
| | High-temp, side | | 146 | 146 | 145 | 145 | 145 | 146 | 168 | 145 |
| Non-reversing heat flow in temperature-modulated DSC | | | 0.77 | 0.82 | 0.83 | 0.73 | 0.80 | 0.84 | 0.76 | 0.76 |
| Natural shrinkage rate (%) | lengthwise | | 0.3 | 0.5 | 0.7 | 0.2 | 0.2 | 0.9 | 0.3 | 0.4 |
| | Widthwise | | 1.3 | 1.3 | 1.4 | 1.5 | 2.1 | 1.9 | 1.3 | 1.4 |
| Finish evaluation | Distortion | | Good | Good | Good | Excellent | Excellent | Good | Good | Good |
| | Wrinkles | | Excellent | Excellent | Excellent | Excellent | Excellent | Excellent | Good | Excellent |
| Perforation opening defective ratio (%) | | | 8 | 6 | 2 | 16 | 8 | 7 | 10 | 11 |
| Roll appearance over time | | | Good | Good | Good | Excellent | Excellent | Good | Good | Good |
| Adequacy for float-sink separation | | | Good | Good | Good | Good | Good | Good | Good | Good |

**[Table 2B]**

| | | | Ex. 9 | Ex. 10 | Ex. 11 | Ex. 12 | Com. Ex. 1 | Com. Ex. 2 | Com. Ex. 3 | Com. Ex. 4 |
|---|---|---|---|---|---|---|---|---|---|---|
| Resin composition (mass%) | PP1 | | 70 | 60 | 60 | 60 | 60 | 60 | 60 | 60 |
| | PP2 | | 0 | 0 | 0 | 0 | 0 | 0 | 0 | 0 |
| | PP3 | | 30 | 40 | 40 | 40 | 40 | 40 | 40 | 40 |
| | PP4 | | 0 | 0 | 0 | 0 | 0 | 0 | 0 | 0 |
| | PP6 | | 0 | 0 | 0 | 0 | 0 | 0 | 0 | 0 |
| MD drawing | First preheating temperature (°C) | | 75 | 76 | 75 | 76 | No MD drawing | 76 | 75 | 76 |
| | First draw rate (fold change) | | 1.3 | 1.3 | 1.3 | 1.3 | | 1.3 | 1.3 | 1.3 |
| | Second preheating temperature (°C) | | 60 | 60 | 60 | 60 | | 60 | 60 | 60 |
| | Second draw rate (fold change) | | 2 | 2 | 2 | 2 | | 2 | 2 | 2 |
| | Total drawing ratio (fold change) | | 2.6 | 2.6 | 2.6 | 2.6 | | 2.6 | 2.6 | 2.6 |
| MD relaxation | Relaxation rate in a lengthwise direction (%) | | 15 | 0 | 15 | 16 | | 16 | 0 | 16 |
| | Rate at MD exit (fold change) | | 2.2 | 2.6 | 2.2 | 2.2 | | 2.2 | 2.6 | 2.2 |
| Heat-treatment | Heat-treatment temp, (°C) | | 125 | 125 | 125 | 125 | 125 | 96 | 125 | 125 |
| TD drawing | Temp. after intermediate cooling (°C) | | 60 | 60 | 60 | 60 | 60 | 60 | 60 | 60 |
| | First drawing conditions | Drawing temp. (° C) | 60 | 60 | 60 | 60 | 60 | 60 | 60 | 60 |
| | | Draw rate (fold change) | 3 | 3 | 3 | 3 | 3 | 3 | 3 | 3 |
| | Second drawing conditions | Drawing temp. (°C) | 60 | 60 | 60 | 60 | 60 | 60 | 60 | 60 |
| | | Draw rate (fold change) | 2.2 | 2.2 | 2.2 | 2.2 | 2.2 | 2.2 | 2.2 | 2.2 |
| | Total draw rate (fold change) | | 6.6 | 6.6 | 6.6 | 6.6 | 6.6 | 6.6 | 6.6 | 6.6 |
| TD relaxation | Relaxation temperature (°C) | | 75 | 76 | 80 | 86 | 75 | 76 | 75 | 76 |
| | Relaxation rate in a widthwise direction (%) | | 15 | 16 | 15 | 16 | 15 | 15 | 15 | 0 |
| | Rate at TD exit (fold change) | | 5.6 | 6.6 | 5.6 | 6.6 | 5.6 | 6.6 | 5.6 | 6.6 |
| | Relaxation rate in a lengthwise direction(%) | | 0 | 15 | 0 | 0 | 0 | 0 | 0 | 0 |
| Thickness (µm) | | | 30 | 30 | 30 | 30 | 30 | 30 | 30 | 30 |
| Rate of thermal shrinkage 90°C (%) | Lengthwise direction | | 9.4 | 8.3 | 7.1 | 6.8 | 2.3 | 18.3 | 11.8 | 8.1 |
| | Widthwise direction | | 73.4 | 60.8 | 66.8 | 60.9 | 65.1 | 66.5 | 60.1 | 63.7 |
| Tensile stress in a lengthwise direction (MPa) | Maximum tensile stress at an elongation rate of 0 to 10% (F10 max) | | 12.9 | 13.3 | 13.3 | 13.4 | 18.7 | 15.1 | 12.9 | 13.2 |
| | Tensile stress at an elongation rate of 30% (F30) | | 14 | 13.8 | 14.3 | 14.4 | 9.1 | 14.8 | 14.8 | 14.9 |
| | Tensile stress ratio(MAX F10/F30) | | 0.9 | 1.0 | 0.9 | 0.9 | 2.1 | 1.0 | 0.9 | 0.9 |
| Right-angled tearing strength (mN/m) | | | 234 | 231 | 219 | 221 | 373 | 210 | 207 | 195 |
| Haze (%) | | | 3.9 | 3.3 | 3.7 | 3.5 | 3.1 | 3.7 | 3.5 | 3.4 |
| Specific gravity | | | 0.89 | 0.89 | 0.89 | 0.89 | 0.89 | 0.89 | 0.89 | 0.89 |
| Refractive index | Nx | | 1.492 | 1.491 | 1.493 | 1.493 | 1.484 | 1.496 | 1.495 | 1.491 |
| | Ny | | 1.509 | 1.507 | 1.504 | 1.505 | 1.616 | 1.503 | 1.504 | 1.606 |
| | Ny-Nx | | 0.017 | 0.016 | 0.011 | 0.012 | 0.032 | 0.008 | 0.009 | 0.015 |
| DSC melting point (°C) | Low-temp, side | | 83 | 89 | 92 | 94 | 89 | 89 | 89 | 89 |
| | High-temp, side | | 145 | 145 | 146 | 145 | 145 | 145 | 145 | 145 |
| Non-reversing heat flow in temperature-modulated DSC | | | 0.85 | 0.77 | 0.74 | 0.72 | 0.78 | 0.83 | 0.96 | 1.17 |
| Natural shrinkage rate (%) | Lengthwise direction | | 0.5 | 0.3 | 0.3 | 0.2 | 0.3 | 0.9 | 3.1 | 0.4 |
| | Widthwise direction | | 2 | 1.3 | 1 | 0.7 | 1.5 | 1.6 | 1.5 | 7.1 |
| Finish evaluation | Distortion | | Good | Good | Good | Good | Excellent | Poor | Good | Good |
| | Wrinkles | | Good | Excellent | Good | Good | Good | Good | Excellent | Excellent |
| Perforation opening defective ratio (%) | | | 11 | 13 | 9 | 8 | 64 | 9 | 7 | 8 |
| Roll appearance over time | | | Good | Good | Good | Excellent | Good | Good | Poor | Poor |
| Adequacy for float-sink separation | | | Good | Good | Good | Good | Good | Good | Good | Good |

### Industrial Applicability

A polypropylene heat-shrinkable film of the invention has excellent shrinking properties and perforation opening property as described above, and can be suitably used for packaging of various articles, including labeling of PET bottles. With its specific gravity smaller than 1.0, a polypropylene heat-shrinkable film of the invention is also suited for float-sink separation from PET bottles, contributing to the efficiency of PET bottle recycling.

## Claims

1. A drawn film comprising a polypropylene resin composition,
wherein
(i) the polypropylene composition uses a copolymer of propylene and other α-olefins, wherein the copolymer of propylene and other α-olefins is a random or block copolymer obtained by polymerizing propylene with one or more of α-olefin selected from ethylene, 1-butene, 1-pentene, 1 hexene, and 1,4-methyl-1-pentene; and
(ii) a melt flow rate (MFR) at 230°C of the polypropylene resin composition, measured in compliance with JIS-K-7210, is 0.1 to 30 g/10 min;
and wherein the drawn film is a polypropylene heat-shrinkable film satisfying the following (1) to (7):
(1) a hot water thermal shrinkage rate in a widthwise direction, determined as disclosed in the description, of 40% or more and 80% or less when the film is immersed in 90°C hot water for 10 seconds,
(2) a hot water thermal shrinkage rate in a lengthwise direction, determined as disclosed in the description, of 1% or more and 12% or less when the film is immersed in 90°C hot water for 10 seconds,
(3) a specific gravity, calculated as a ratio of the film density, measured by the density gradient column method in compliance with JIS K7112, to the density of water at 23°C, of 0.87 or more and 0.95 or less,
(4) a right-angled tear strength in the range of 100 mN/mm or more and 330 N/mm or less in a lengthwise direction when the film is subjected to 10% shrinkage in a widthwise direction in hot water at 80°C as disclosed in the description,
(5) a refractive index difference Ny - Nx of 0.005 or more and 0.028 or less, where Ny is a widthwise direction refractive index, and Nx is a lengthwise direction refractive index, with the refractive indices being determined as disclosed in the description,
(6) a widthwise direction natural shrinkage rate, determined as disclosed in the description, of 0.1% or more and 3.0% or less after the polypropylene heat-shrinkable film is aged for 672 hours in a 40°C, 65% RH atmosphere, and
(7) a lengthwise direction natural shrinkage rate of 0.1% or more and 1.0% or less after the polypropylene heat-shrinkable film is aged for 672 hours in a 40°C, 65% RH atmosphere as disclosed in the description.

2. The polypropylene heat-shrinkable film according to claim 1, wherein the film has a ratio of 0.5 or more and 1.9 or less when a maximum value of tensile stress at an elongation rate of 0 to 10% divided by a tensile stress at an elongation rate of 30%, as measured with a tensile test disclosed in the description in a lengthwise direction of the film.

3. The polypropylene heat-shrinkable film according to claim 1, wherein the film has a haze of 1% or more and 12% or less measured as disclosed in the description.

4. The polypropylene heat-shrinkable film according to claim 1, wherein the film has one or more melting peak temperatures in each of a range of 70°C or higher and 100°C or lower, and a range of higher than 100°C and 170°C or lower, as measured with a differential scanning calorimeter.

5. The polypropylene heat-shrinkable film according to claim 1, wherein the film has a peak in a range of 20°C or higher and 60°C or lower in non-reversing heat flow measured as disclosed in the description with a temperature-modulated scanning calorimeter, and a heat absorption, determined as disclosed in the description, of 0.3 J/g or more and 0.95 J/g or less at the peak.

6. The polypropylene heat-shrinkable film according to claim 1, wherein the film has a widthwise direction refractive index Ny, determined as disclosed in the description of 1.490 or more and 1.530 or less.

7. The polypropylene heat-shrinkable film according to claim 1, wherein the film has a thickness of 12 µm or more and 100 µm or less.

8. The polypropylene heat-shrinkable film according to claim 1, wherein the polypropylene resin composition constituting the polypropylene heat-shrinkable film comprises ethylene or 1-butene as a copolymerized component.

9. Alabel comprising the polypropylene heat-shrinkable film of any one of claims 1 to 8 as a base material, and having perforations or pairs of notches.

10. A packaged article comprising a label over at least a part of the outer periphery of a subject of packaging, the label being the polypropylene heat-shrinkable film of any one of claims 1 to 8 in a cylindrical form.

11. Use of the label of claim 9 for labeling a packaged article over at least a part of the outer periphery of a subject of packaging.

## Patentansprüche

1. Eine gereckte Folie, umfassend eine Polypropylenharzzusammensetzung,
wobei
(i) die Polypropylenzusammensetzung ein Copolymer aus Propylen und anderen α-Olefinen verwendet, wobei das Copolymer aus Propylen und anderen α-Olefinen ein statistisches Copolymer oder ein Blockcopolymer ist, welches durch Polymerisation von Propylen mit einem oder mehreren α-Olefinen, ausgewählt aus Ethylen, 1-Buten, 1-Penten, 1-Hexen und 1,4-Methyl-1-penten, erhalten wird; und
(ii) eine Schmelzflussrate (MFR) der Polypropylenharzzusammensetzung bei 230°C, gemessen gemäß JIS-K-7210, 0,1 bis 30 g/10 min beträgt;
und wobei die gereckte Folie eine wärmeschrumpfbare Polypropylenfolie ist, welche die folgenden Bedingungen (1) bis (7) erfüllt:
(1) eine thermische Warmwasser-Schrumpfrate in Breitenrichtung, bestimmt wie in der Beschreibung offenbart, von 40% oder mehr und 80% oder weniger, wenn die Folie 10 Sekunden lang in 90°C warmes Wasser getaucht wird,
(2) eine thermische Warmwasser-Schrumpfrate in Längsrichtung, bestimmt wie in der Beschreibung offenbart, von 1% oder mehr und 12% oder weniger, wenn die Folie 10 Sekunden lang in 90°C warmes Wasser getaucht wird,
(3) ein spezifisches Gewicht, berechnet als ein Verhältnis der gemäß JIS K7112 mittels des Dichtegradienten-Säulenverfahrens gemessenen Filmdichte zu der Dichte von Wasser bei 23°C, von 0,87 oder mehr und 0,95 oder weniger,
(4) eine rechtwinklige Reißfestigkeit im Bereich von 100 mN/mm oder mehr und 330 N/mm oder weniger in Längsrichtung, wenn die Folie, wie in der Beschreibung offenbart, in 80°C warmem Wasser einer Schrumpfung von 10% in Breitenrichtung unterzogen wird,
(5) eine Brechungsindexdifferenz Ny - Nx von 0,005 oder mehr und 0,028 oder weniger, wobei Ny ein Brechungsindex in Breitenrichtung und Nx ein Brechungsindex in Längsrichtung ist, wobei die Brechungsindizes wie in der Beschreibung offenbart, bestimmt werden,
(6) eine natürliche Schrumpfrate in Breitenrichtung, bestimmt wie in der Beschreibung offenbart, von 0,1% oder mehr und 3,0% oder weniger, nachdem die wärmeschrumpfbare Polypropylenfolie 672 Stunden lang in einer Atmosphäre bei 40°C und 65% relativer Luftfeuchtigkeit gealtert wurde, und
(7) eine natürliche Schrumpfrate in Längsrichtung von 0,1% oder mehr und 1,0% oder weniger, nachdem die wärmeschrumpfbare Polypropylenfolie 672 Stunden lang in einer Atmosphäre bei 40°C und 65% relativer Luftfeuchtigkeit gealtert wurde, wie in der Beschreibung offenbart.

2. Die wärmeschrumpfbare Polypropylenfolie gemäß Anspruch 1, wobei die Folie ein Verhältnis von 0,5 oder mehr und 1,9 oder weniger aufweist, wenn ein Maximalwert der Zugspannung bei einer Dehnungsrate von 0 bis 10% durch die Zugspannung bei einer Dehnungsrate von 30% geteilt wird, gemessen mit einem in der Beschreibung offenbarten Zugversuch in Längsrichtung der Folie.

3. Die wärmeschrumpfbare Polypropylenfolie gemäß Anspruch 1, wobei die Folie eine Trübung von 1% oder mehr und 12% oder weniger aufweist, gemessen wie in der Beschreibung offenbart.

4. Die wärmeschrumpfbare Polypropylenfolie gemäß Anspruch 1, wobei die Folie eine oder mehrere Schmelzpeaktemperaturen jeweils in einem Bereich von 70°C oder höher und 100°C oder niedriger sowie in einem Bereich von höher als 100°C und 170°C oder niedriger aufweist, gemessen mit einem Differential-Scanning-Kalorimeter.

5. Die wärmeschrumpfbare Polypropylenfolie gemäß Anspruch 1, wobei die Folie einen Peak in einem Bereich von 20°C oder höher und 60°C oder niedriger in einem nicht reversierenden Wärmefluss aufweist, gemessen mit einem temperaturmodulierten Scanning-Kalorimeter wie in der Beschreibung offenbart, und eine wie in der Beschreibung offenbart bestimmte Wärmeabsorption von 0,3 J/g oder mehr und 0,95 J/g oder weniger an dem Peak aufweist.

6. Die wärmeschrumpfbare Polypropylenfolie gemäß Anspruch 1, wobei die Folie einen Brechungsindex Ny in Breitenrichtung, wie in der Beschreibung offenbart bestimmt, von 1,490 oder mehr und 1,530 oder weniger aufweist.

7. Die wärmeschrumpfbare Polypropylenfolie gemäß Anspruch 1, wobei die Folie eine Dicke von 12 µm oder mehr und 100 µm oder weniger aufweist.

8. Die wärmeschrumpfbare Polypropylenfolie gemäß Anspruch 1, wobei die Polypropylenharzzusammensetzung, welche die wärmeschrumpfbare Polypropylenfolie bildet, Ethylen oder 1-Buten als copolymerisierte Komponente umfasst.

9. Ein Etikett, welches die wärmeschrumpfbare Polypropylenfolie gemäß einem der Ansprüche 1 bis 8 als ein Trägermaterial umfasst und Perforationen oder Kerbenpaare aufweist.

10. Ein verpackter Gegenstand, umfassend ein Etikett, welches zumindest einen Teil des Außenumfangs eines Verpackungsgegenstands bedeckt, wobei das Etikett die wärmeschrumpfbare Polypropylenfolie gemäß einem der Ansprüche 1 bis 8 in einer zylindrischen Form ist.

11. Verwendung des Etiketts gemäß Anspruch 9 zur Kennzeichnung eines verpackten Gegenstandes über mindestens einen Teil des Außenumfangs eines Verpackungsgegenstands.

## Revendications

1. Film étiré comprenant une composition de résine de polypropylène,
dans lequel
(i) la composition de résine de polypropylène utilise un copolymère de propylène et d'autres α-oléfines, dans laquelle le copolymère de propylène et d'autres α-oléfines est un copolymère à blocs ou aléatoire obtenu par polymérisation du propylène avec une ou plusieurs α-oléfines choisies parmi l'éthylène, le 1-butène, le 1-pentène, le 1-hexène, et le 1,4-méthyl-1-pentène ; et
(ii) l'indice de fluidité à chaud (MFR) à 230°C de la composition de résine de polypropylène, mesuré conformément à la norme JIS-K-7210, est de 0,1 à 30 g/10 min ;
et dans lequel le film étiré est un film thermorétractable de polypropylène répondant aux conditions suivantes (1) à (7) :
(1) un taux de thermorétraction à l'eau chaude dans la direction de la largeur, déterminé comme divulgué dans la description, de 40 % ou plus et de 80 % ou moins quand le film est immergé dans de l'eau chaude à 90°C pendant 10 secondes,
(2) un taux de thermorétraction à l'eau chaude dans la direction de la longueur déterminé comme divulgué dans la description, de 1 % ou plus et de 12 % ou moins quand le film est immergé dans de l'eau chaude à 90°C pendant 10 secondes,
(3) une densité relative, calculée en tant que rapport de la densité du film, mesurée par la méthode de la colonne à gradient de densité conformément à la norme JIS K7112, à la densité de l'eau à 23°C, de 0,87 ou plus et de 0,95 ou moins,
(4) une résistance à la déchirure à angle droit dans la plage de 100 mN/mm ou plus et de 330 N/mm ou moins dans la direction de la longueur quand le film est soumis à une rétraction de 10 % dans la direction de la largeur dans de l'eau chaude à 80°C comme divulgué dans la description,
(5) une différence d'indice de réfraction Ny - Nx de 0,005 ou plus et de 0,028 ou moins, où Ny est l'indice de réfraction dans la direction de la largeur, et Nx est l'indice de réfraction dans la direction de la longueur, les indices de réfraction étant déterminés comme divulgué dans la description,
(6) un taux de rétraction naturelle dans la direction de la largeur, déterminé comme divulgué dans la description, de 0,1 % ou plus et de 3,0 % ou moins après que le film thermorétractable de polypropylène est vieilli pendant 672 heures dans une atmosphère à 40°C, à 65 % de RH, et
(7) un taux de rétraction naturelle dans la direction de la longueur, de 0,1 % ou plus et de 1,0 % ou moins après que le film thermorétractable de polypropylène est vieilli pendant 672 heures dans une atmosphère à 40°C, à 65 % de RH, comme divulgué dans la description.

2. Film thermorétractable de polypropylène selon la revendication 1, dans lequel le film a un rapport de 0,5 ou plus et de 1,9 ou moins quand la valeur maximale de contrainte à la traction à un taux d'allongement de 0 à 10 % est divisée par une contrainte à la traction à un taux d'allongement de 30 %, mesuré avec un test de traction divulgué dans la description dans la direction de la longueur du film.

3. Film thermorétractable de polypropylène selon la revendication 1, dans lequel le film a un trouble de 1 % ou plus et de 12 % ou moins mesuré comme divulgué dans la description.

4. Film thermorétractable de polypropylène selon la revendication 1, dans lequel le film a une ou plusieurs températures de pic de fusion dans chacune parmi : une plage de 70°C ou plus et de 100°C ou moins, et une plage supérieure à 100°C et 170°C ou moins, mesurées par calorimètre différentiel à balayage.

5. Film thermorétractable de polypropylène selon la revendication 1, dans lequel le film a un pic dans la plage de 20°C ou plus et de 60°C ou moins dans un flux thermique non réversible mesuré comme divulgué dans la description avec un calorimètre à balayage modulé en température, et une absorption de chaleur, déterminée comme divulgué dans la description, de 0,3 J/g ou plus et de 0,95 J/g ou moins au niveau du pic.

6. Film thermorétractable de polypropylène selon la revendication 1, dans lequel le film a un indice de réfraction dans la direction de la largeur Ny, déterminé comme divulgué dans la description, de 1,490 ou plus et de 1,530 ou moins.

7. Film thermorétractable de polypropylène selon la revendication 1, dans lequel le film a une épaisseur de 12 µm ou plus et de 100 µm ou moins.

8. Film thermorétractable de polypropylène selon la revendication 1, dans lequel la composition de résine de polypropylène constituant le film thermorétractable de polypropylène comprend de l'éthylène ou du 1-butène, en tant que composant copolymérisé.

9. Étiquette comprenant le film thermorétractable de polypropylène selon l'une quelconque des revendications 1 à 8 comme matériau de base, et ayant des perforations ou des paires d'encoches.

10. Article emballé comprenant une étiquette sur au moins une partie de la périphérie externe d'un objet d'emballage, l'étiquette étant le film thermorétractable de polypropylène selon l'une quelconque des revendications 1 à 8 sous une forme cylindrique.

11. Utilisation de l'étiquette selon la revendication 9 pour l'étiquetage d'un article emballé sur au moins une partie de la périphérie externe d'un objet d'emballage.
